# EUROPEAN PATENT APPLICATION

(11) **EP 1 422 453 A1**
(43) Date of publication of application: **26.05.2004**
(21) Application number: 03026520.1
(22) Date of filing: 18.11.2003
(51) Int. Cl.: F16K 11/074, B67C 3/28

(54) **Hydraulic multiway valve device**

(30) Priority: 20.11.2002 IT BO20020735
(71) Applicant: MARCHESINI GROUP S.p.A., I-40065 Pian di Macina Pianoro (Bologna) (IT)
(72) Inventor: Monti, Giuseppe, 40065 Pianoro Bologna (IT)
(74) Representative: Dall'Olio, Giancarlo

(57) **Abstract**

In a hydraulic multi-way valve device (1), a first stationary body (2) is set in direct touch with a second rotating body (3), and a groove (30) is made in the second rotating body to be set alternatively in communication, through a plurality of holes (41,51,61) made in the first stationary body, with a plurality of channels (40,50,60) conveying liquid substances. A shaft (5) drives the second body into rotation with respect to the first stationary body, and is connected to a chamber (7) fed with compressed air so as to apply and maintain a pressure by the second rotating body onto the first stationary body

## Description

The present invention relates to automatic machines for filling containers with liquid substances, with particular reference to hydraulic multi-way valve devices, which can alternatively set in communication a plurality of channels.

There are different types of automatic machines which fill containers such as vials, bottles and the like, with liquid substances.

These machines, which usually receive the bottles to fill in orderly way from a feeding line, include means for delivering liquid substance, which means are aimed at cooperating cyclically with means for connecting the bottles with nozzles of the delivering means.

Afterwards, the filled containers are transferred to an outlet line.

The delivering means usually include a plurality of means aimed at imposing the liquid a predetermined pressure and at being set in communication with liquid feeding channels.

The feeding channels are connected to a liquid tank via valve means.

There are automatic machines for delivering liquid substances to bottles, which are for instance situated on rotating means. These machines include: means for feeding empty bottles to be filled with a liquid substance; a carrousel rotating on a vertical axis and aimed at receiving orderly empty bottles from the feeding means; bottles gripping means, carried along the edge of the carrousel; means for delivering a liquid substance, which means cooperate cyclically with the bottles gripping means to fill the bottles; means for moving the filled bottles away from the carrousel.

In particular, the document IT 1.242.879 proposes a device for delivering liquid substances to bottles, which includes, amongst other parts, a chamber for supplying a liquid substance. The chamber is concentric with a carrousel platform, and is set in communication with the delivering means by a plurality of channels made in the platform.

Suitable valve means, carried peripherally by the platform, are operated so as to allow the liquid substance to be fed to the delivering means through the above mentioned channels.

Usually, each of the valve means under consideration includes a lower body, fastened to the carrousel platform, and an upper body, rotating with respect to the lower body and set concentric therewith.

A feeding channel passes through the upper rotating body and is alternatively set in communication with channels made in the platform.

The feeding channel extends preferably in a shape alike an arc on a horizontal plane, e.g. it has a semi-circle form. Branches originates from the feeding channel, at its ends and in the middle, and extend downwards for alternatively setting the channels in communication with a pump member.

A pair of vertical holes passes through the lower motionless body. The holes are parallel and their lower part communicates with the channels made in the platform.

The platform and the lower motionless body of the valve feature matching vertical holes, which set the pump member in communication with the feeding channel.

In its upper part, the rotation body carries a protruding eccentric pin, which rotates axially and, when the platform rotates, can strike either one or the other of a pair of plates, carried by the machine stationary framework, in positions diametrically opposite with respect to the carrousel.

The plates are carried by respective actuators, which can move vertically, so as to lift the plates in such positions, that they are disengaged from the eccentric pin. This way it is possible to rotate the upper rotating body with respect to the lower motionless body.

The mutual contact between the two bodies, i.e. the lower motionless body and the upper rotating body, is ensured by elastic spring means, which are capable of avoiding leakage of the substance in the region of the contact area of the two bodies.

It is to be pointed out that if the liquid substance to be delivered must be changed, all the channels must be first sterilized by suitable substances, so as to prevent any contamination.

This requires the introduction of sterilizing substances into the channels with high injection pressure, which causes the risk of leakage through clearances possibly present along the liquid way.

The so conceived valve means, according to prior art, require an operation of the upper rotation body, which turns out to be particularly difficult and laborious.

Moreover, the elastic spring means, aimed at keeping the upper rotating body pressed against the lower motionless body, must be inevitably set up for the least viscous fluid substance, so that leakages are surely avoid through the discontinuous sections when more viscous substances are used.

However, this causes a constant considerable friction between the lower motionless body and the upper rotating body, during the rotation, which can result in difficult operation of the valve means.

In order to avoid the above drawbacks, it is necessary to adjust and/or substitute the elastic spring means in accordance with the viscosity of different liquid substances to be delivered and in accordance with the viscosity of the sterilizing products used during the sterilization process.

Obviously, this requires specialized staff with a certain experience in the field, so as not to proceed with many ineffective attempts.

The object of the present invention is to propose a hydraulic multi-way valve device, which avoids the above mentioned drawbacks and which ensures best delivery of liquid substances with different viscosity, avoiding any liquid substances leakage.

Another object of the present invention is to propose a hydraulic valve device, which can be operated and adjusted by any operator of the field, even without special experience, and which is highly reliable in any operation conditions, including the sterilization of the device and the means connected thereto.

A further object of the present invention is to propose a valve device which ensures high functionality and production rate in any operation conditions, requiring simple installation steps and rapid ordinary and extraordinary maintenance operations.

The above mentioned objects are achieved by the features of the independent claim 1, while preferred features are defined in the dependent claims.

The invention will now be described in more detail with reference to particular, non-limiting embodiments and with reference to the accompanying drawings, in which:
- Figure 1 is a schematic lateral, partially sectional view of the multi-way valve device proposed by the present invention;
- Figures 2a, 2b are schematic views of as many particularly important operation steps relevant to the valve device of Figure 1;
- Figure 3 is a schematic perspective exploded view of the elements of the proposed hydraulic valve device;
- Figure 4 is a schematic perspective exploded view of some of the elements shown in Figure 3, from the opposite side with respect to Figure 3;
- Figure 5 shows a possible schematic diagram of the pneumatic system of the valve device proposed by the invention.

With reference to the above mentioned drawings, the general reference numeral 1 indicates the proposed hydraulic multi-way valve device, including substantially a first body 2, motionless with respect to a support structure 100 of the valve device 1, and set in direct touch with a second body 3, rotating and concentric with respect to the first motionless body 2.

The second rotating body 3 has an open channel, in form of a groove 30, e.g. with semi-circle shape, which is alternatively set in communication, through a plurality of holes 41, 51, 61 formed by the first motionless body 2, with a plurality of channels 40, 50, 60 conveying liquid substances.

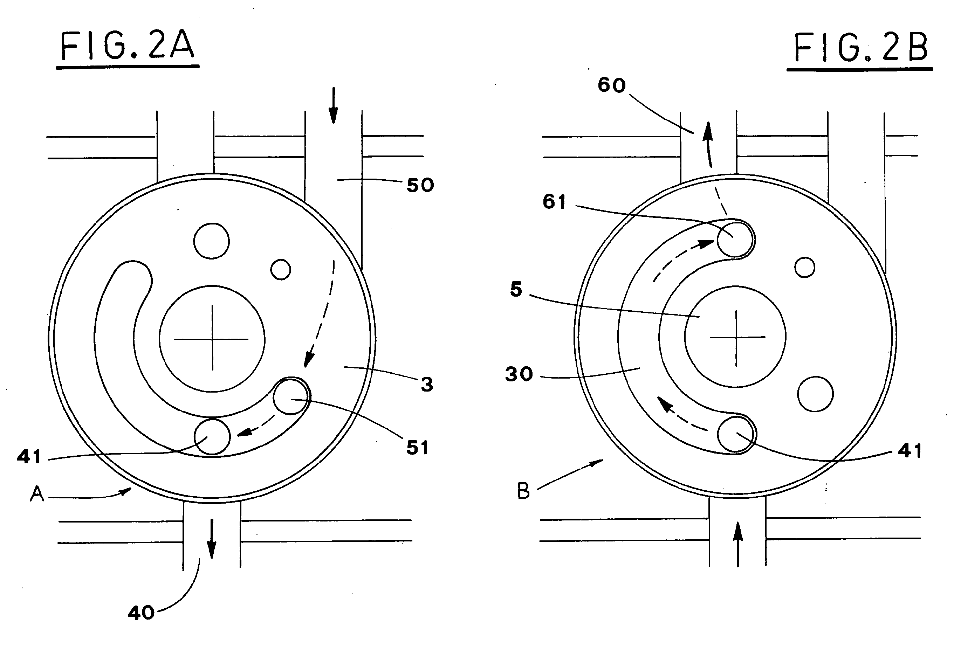

The first channel 40 is connected to a liquid substances pumping member, which is alternatively set in communication, via the same first pumping channel 40 and according to widely known techniques, with a second channel 50 and a third channel 60, aimed respectively at sucking liquid substances from a feeding tank and at sending liquid substances to the delivering means (Figures 2a, 2b).

For clarity, the enclosed figures do not show the delivering means, the pumping member and the liquid substances feeding tank, since they are of known type.

The valve device 1 is also equipped with operating means which can drive the second body 3 into rotation with respect to the first motionless body 2, and with means for adjusting the pressure applied by the second body 3 onto the first motionless body 2. The pressure adjusting means are controlled by an operating fluid, preferably compressed air.

The operating means include a shaft 5, rotated by driving means 6. The motionless body 2 and the rotating body 3 are in coaxial relation with the shaft 5.

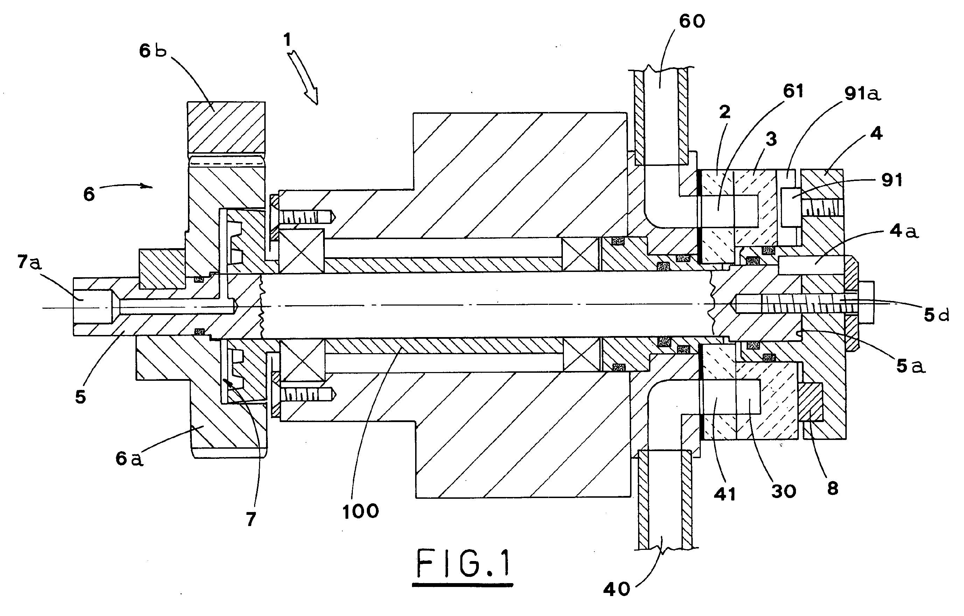

As it is clearly shown in Figure 1, according to the proposed embodiment, the driving means 6 include a toothed wheel 6a, keyed onto the shaft 5 and aimed at meshing with a rack 6b.

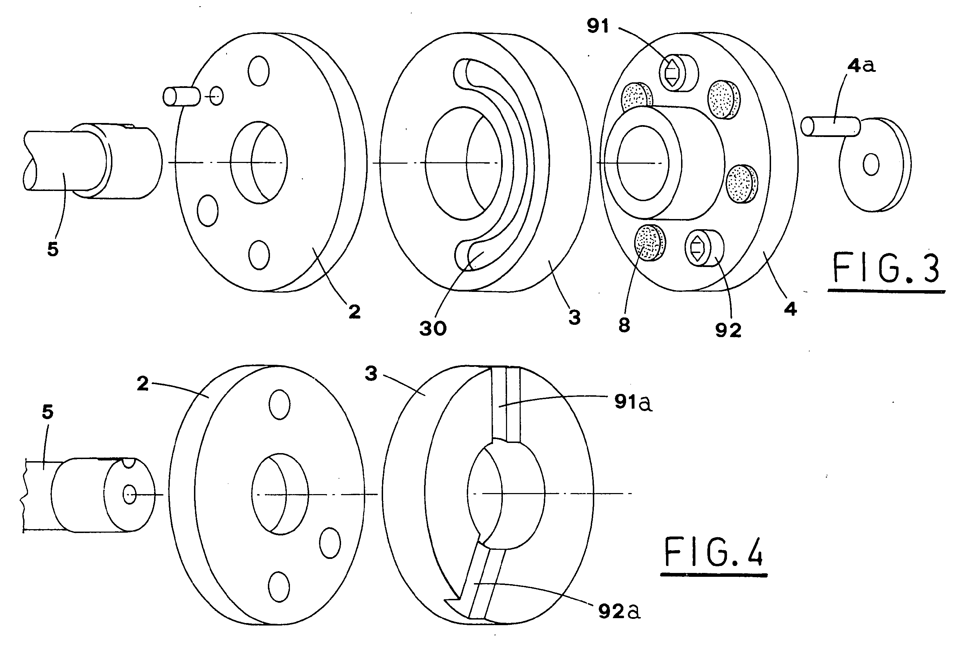

The second body 3 is removably carried by an end 5a of the shaft 5 directly or by interposition of a plate 4 (Figures 1 and 3).

The plate 4 is removably fastened to the end 5a of the shaft 5, for example, by a fastening screw 5d, and at the same time, it is fastened to the second body 3 by coupling means.

The coupling means include, for example, a pair of protrusions 91, 92 going out of the plate 4 and aimed at entering corresponding radial notches 91a, 92a, made in the portion of the second rotating body 3 which faces the plate 4.

The rigid connection with respect to rotation between the plate 4 and the shaft 5 is obtained by means of a pin 4a suitably interposed therebetween, e.g. engaging semicircular seats made in the inner surface of the central hole of the plate 4 and on the outer matching surface of the shaft 5.

As it is shown in Figures 1 and 3, elastic means 8 are situated between the plate 4 and the second rotating body 3, so as to stabilize axially the shaft 5 when it rotates.

The above mentioned adjusting means include a closed ring-like chamber 7, delimited by the support structure 100 of the valve device 1 and by the toothed wheel 6a. The chamber 7 is aimed at being filled with compressed air.

The compressed air, which is introduced into the closed ring-like chamber 7 by a duct 7a, causes the shaft 5 to be pulled, so that the second rotating body 3 is pushed against the first motionless body 2 by the plate 4.

The duct 7a is made in the shaft 5, preferably in coaxial relation thereto (Figure 1).

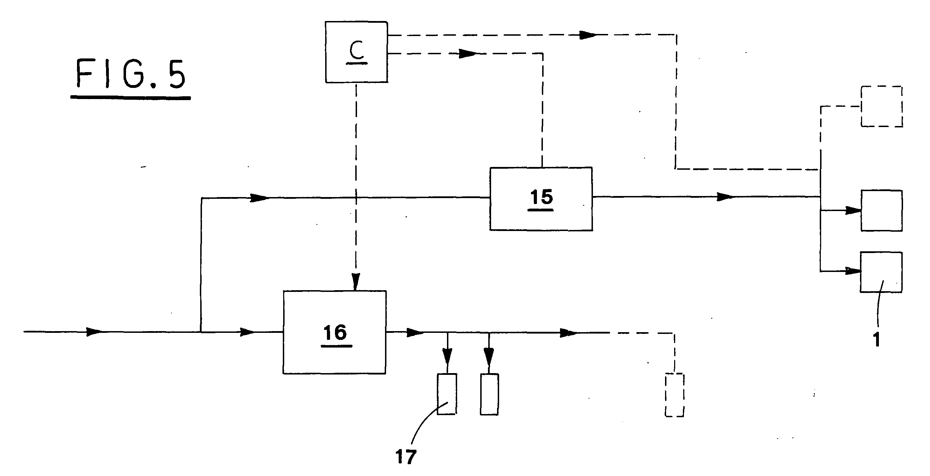

Figure 5 shows a connection schematic diagram of the pneumatic system connected to the valve device proposed by the invention.

In particular, in the pneumatic system the compressed air is supplied to the closed ring-like chamber 7, under the command of a control unit C and through a proportional adjustment valve 15, which allows to adjust and maintain the pressure in the ring-like chamber 7. The adjustment valve 15 is set on a branching originating upstream of a shutoff unit 16, which is controlled by the control unit C, to allow or prevent feeding of the pneumatic actuating means 17, associated to the working machine (not shown) in which the valve device 1 is made.

In case the machine stops, for example because of a fault, the shutoff unit 16, as required by safety regulation, stops, in known way, the compressed air supply to the actuating means 17 connected to the machine.

Advantageously, this method does not influence in any way the adjustment valve 15, which continues to be fed, and consequently, keeps the closed ring-like chamber 7 always under pressure, thus avoiding any loss of contact between the second rotating body 3 and the first motionless body 2. In this way, any leakage caused by the hydraulic push of the liquid substances flowing in the channels 40, 50, 60 is prevented.

The operation of the proposed valve device 1 will be now briefly described, with reference to a complete cycle of suction and discharge of a liquid substance, respectively withdrawn and expelled by the pump member.

When the valve device 1 is in a suction configuration A, the groove 30 formed by the rotating body 3 sets in communication, through the holes 41, 51 made in the first motionless disc 2, the first pumping channel 40 with the second suction channel 50, thus facilitating the withdrawing of the liquid substance from the feeding tank by the relevant pumping means (Figure 2a).

When the pumping means have finished the suction step, the rack 6b is operated in the direction opposite to the previous one, to mesh with the toothed wheel 6a keyed onto the shaft 5, so as to make the shaft 5 rotate by an angle, which is sufficient for the valve device 1 to reach the delivery configuration B, in which the groove 30 sets in communication, through the holes 41, 61 made in the first motionless disc 2, the first pumping channel 40 with the third delivering channel 60.

In this configuration, outputting of the liquid substance, accumulated by the pumping means, toward the delivery means, for filling the corresponding bottles and/or containers, which are not shown (Figure 2b), is facilitated.

When the pumping means have finished the delivery step, the rack 6b is operated once again, so as to repeat again the above described working cycle of suction and delivery.

For a predetermined viscosity of the liquid substance and for a predetermined working pressure, it is easy to determine the working pressure of the compressed air in the ring-like chamber 7, which can maintain the first motionless body 2 firmly in contact with the second rotating body 3 during the motion imposed to the latter between the extreme configurations, suction configuration A and delivery configuration B.

In this way, any leakage through the discontinuous sections, in which the liquid substance in question passes, is avoided.

The working pressure of the compressed air in the ring-like chamber 7 is suitably changed in relation to the changes of the working pressure of the liquid substance in the channels, and in relation to the changes of viscosity of the liquid substance.

The changes of viscosity can result from different working conditions (for instance temperature), or from the change of the liquid substance to be delivered.

In the latter case, before the introduction of the new substance into the channels 40, 50, 60 and into the feeding tank, the valve device 1 is sterilized, in order to avoid possible contaminations.

The sterilization is performed by injecting a sterilizing liquid of a predetermined pressure and temperature into the channels 40, 50, 60.

During this step, the working pressure of the sterilizing liquid is generally higher than the normal working pressure of a liquid substance, therefore, the working pressure of the compressed air inside the ring-like chamber 7 must be correspondingly adjusted.

To carry out this operation, the shaft 5 is rotated by acting on the rack 6b, so as to bring the valve device 1 from the suction configuration A to the delivery configuration B, and vice versa.

At the same time, by acting on the proportional adjustment valve 15, thus on the working pressure of the compressed air in the ring-like chamber 7, the driving force acting on the shaft 5 is changed and consequently, the pressure applied by the second rotating body 3 onto the first motionless body 2 is changed as well.

The rotation of the shaft 5 and the adjustment of the pressure of the compressed air in the ring-like chamber 7 can be controlled and programmed in a simple and rapid way by anybody, by means of the control unit C, usually connected to a control group, not shown, including at least a keyboard and a video.

According to further, equivalent embodiments, the closed ring-like chamber 7 can be delimited between the support structure 100 of the valve device 1 and the toothed wheel 6a keyed onto the shaft 5 (as shown in the enclosed figures), or between the support structure 100 and any part connected to the shaft 5, e.g. a disc or the like.

Likewise, the closed ring-like chamber 7 can be delimited, near the end 5a of the shaft 5, between a portion, which is motionless with respect to the valve device 1 and the plate 4, or between the latter and the second rotating body 3.

Therefore, the proposed hydraulic multi-way valve device, according to the described embodiments, ensures best delivery of liquid substances also in case of changing viscosity, thus avoiding any leakage of the liquid substances.

The simplicity and diffusion of the elements making up the device allow to make it very strong and undeniably reliable in any working conditions.

The possibility to adjust the valve device between its extreme configurations, of suction and of delivery, by means of the rack, and to adapt the viscosity and the working pressure of the liquid substances by the adjustment of the working pressure of the compressed air in the ring-like chamber, allow any operator of the field, even completely inexperienced, to perform this operation.

## Claims

1. Hydraulic multi-way valve device including:
a support structure (100) for said of said valve device (1)
a first body (2), mounted stationary onto said support structure;
a plurality of channels (40,50,60) connected to a plurality of holes (41,51,61) made in said first body;
a second body (3), rotatably mounted in coaxial relation and direct touch with said first body, so that said second body can rotate with respect to said first body;
a groove (30) made in said second body and set alternatively in communication with said channels;
the valve device being **characterized in that** it further includes:
operating means acting on said second body (3) for rotating it with respect to said stationary first body (2);
means for adjusting the pressure applied by said second rotating body (3) onto said first stationary body 2, operated by an operation fluid.

2. Valve device according to claim 1, **characterized in that** said operating means include a shaft (5) mounted concentric within said first body (2) and second body (3) and joined to said second body (3), said shaft being rotated by driving means (6) to cause rotation of said second body with respect to said first body stationary.

3. Valve device according to claim 2, **characterized in that** it includes a plate (4), removably fastened to the end (5a) of the shaft (5) and joined to said second body (3) by coupling means.

4. Valve device, according to claim 2 or 3, **characterized in that** said adjusting means include at least one close chamber (7), delimited by said support structure (100) of the valve device (1) and by a portion connected to said shaft (5), which chamber can be filled with said operation fluid under pressure, so that the shaft (5) is pulled, making said second rotating body (3) to be pressed on said first motionless body (2).

5. Valve device, according to claim 4, **characterized in that** said closed chamber (7) is delimited by said support structure (100) and by driving means (6) connected to said shaft (5).

6. Valve device, according to claim 4 or 5, **characterized in that** it includes a feeding duct (7a), made in said shaft (5), leading to said closed chamber (7) and aimed at conveying said operation fluid.

7. Valve device, according to claim 4 or 5 or 6, **characterized in that** said operation fluid entering said closed chamber (7), feeds the latter through at least one proportional adjustment valve, which allows adjustment and keeps the pressure inside said closed chamber (7), and which is set on a branching originating upstream of at least one shutoff unit for allowing or preventing the feeding of corresponding pneumatic actuating means.

8. Valve device, according to claim 3, **characterized in that** it includes elastic means (8), interposed between said plate (4) and said second rotating body (3), to stabilize axially the shaft (5) with respect to said bodies, motionless (2) and rotating (3).

9. Valve device according to claim 3 or 8, **characterized in that** a rigid connection, with respect to rotation, between said plate (4) and said shaft (5) is obtained by means of a pin (4a) suitably interposed therebetween.

10. Valve device, according to claim 3, **characterized in that** said coupling means include at least one protrusion (91,92), connected to said plate (4) for introducing into a corresponding notch (91a,92a) made in said second rotating body (3), so as to drive said second rotating body (3).

11. Valve device, according to any of the previous claims, **characterized in that** said driving means (6) include a toothed wheel (6a), keyed onto said shaft (5) and aimed at meshing with a rack (6b) to drive said shaft (5) into rotation.

12. Valve device, according to any of the claims from 4 to 7, **characterized in that** said closed chamber (7) is ring-like.

13. Valve device, according to any of the previous claims, **characterized in that** said operation fluid, for operating said means for adjusting the pressure applied by said second rotating body (3) onto said first motionless body (2), is gas.

14. Valve device, according to claim 11, **characterized in that** said operation liquid is compressed air.

15. Device, according to claim 1, **characterized in that** said channel (40) is connected to a member pumping said liquid substances, and **in that** said pumping member is alternatively set in communication, by means of said pumping channel (40), with said channels (50,60) aimed respectively at sucking said liquid substances from a feeding tank and at sending the liquid substances to delivering means.
